# EUROPÄISCHE PATENTSCHRIFT

(11) **EP 4 032 388 B1**
(45) Veröffentlichungstag und Bekanntmachung des Hinweises auf die Patenterteilung: **02.04.2025**
(21) Anmeldenummer: 22151933.3
(22) Anmeldetag: 18.01.2022
(51) Int. Cl.: A01D 41/00, A01D 57/26, A01F 12/18

(54) **ERNTEMASCHINE**
HARVESTER
ENGIN D'ABATTAGE-FAÇONNAGE

(30) Priorität: 26.01.2021 DE 202021100361 U
(43) Veröffentlichungstag der Anmeldung: 27.07.2022
(73) Patentinhaber: AB. Agri-Broker e.K., 42699 Solingen (DE); Zang, Günter, 63825 Schöllkrippen (DE); Zang, Michael, 63825 Schöllkrippen (DE)
(72) Erfinder: Zang, Günter, 63825 Schöllkrippen (DE); Zang, Michael, 63825 Schöllkrippen (DE); Wollesen, Jörg, 42699 Solingen (DE)
(74) Vertreter: RGTH

(56) Entgegenhaltungen:
- WO-A1-2019/015728
- DE-B4- 102012 013 194
- US-A1- 2006 025 188

## Beschreibung

Die Erfindung betrifft eine Erntemaschine, insbesondere einen Mähdrescher, mit einem Schneidwerk, einem Schrägförderer, der Schrägfördermittel aufweist, wobei in einem Transportbereich eine ebene Platte mit einer vorderen Kante und mit mehreren in Reihe angeordneten Erhebungen angeordnet ist.

Mähdrescher dienen dazu, das Getreide zu mähen, das hierin enthaltene Korn auszudreschen und anschließend das Korn vom Kaff oder von Nichtkornbestandteilen zu trennen. Nach dem Stand der Technik bekannte Mähdrescher besitzen hierzu eine Aufnahmevorrichtung mit einem Schneidwerk, mittels dessen von einem Messerbalken oder Mähwerk das Getreide geschnitten wird. Das geschnittene Getreide wird durch einen Schrägförderer zu einer Dreschtrommel transportiert. Um eine effiziente Arbeitsweise zu schaffen, können die Schneidwerke deutlich breiter als der Mähdrescher ausgebildet sein. Das geschnittene Erntegut wird in solchen Fällen über Querförderschnecken zu einem Schrägförderer transportiert, der in einem Kanal angeordnet ist und eine Deckenwand, eine Bodenwand und zwei Seitenwände aufweist. Der Schrägförderer fördert das Erntegut auf der Bodenwand des Förderkanals einer Drescheinheit zu, in der das Korn aus den Ähren herausgedroschen wird. Um die Förderung des Erntegutes zu optimieren, wird beispielsweise in der DE 20 2020 101 458 U1 die Verwendung von Mitnehmerleisten vorgeschlagen, bei denen mindestens eine der Kanten nicht linear ausgebildet ist und Einbuchtungen und Erhebungen aufweist, deren Abstand vom Maximum zum Minimum zwischen 4 mm und 20 mm liegt. Der Förderkanal besitzt eine Höhe zwischen 5 mm bis 45 mm.

In der DE 10 2012 013 194 B4 wird eine Erntemaschine beschrieben, in deren Transportbereich eine Mehrzahl von ecken- und kantenfreien Erhebungen angeordnet ist. Diese Erhebungen dienen dazu, bereits beim Transport des Erntegutes teilweise Korn aus den Ähren herauszulösen, so dass i.V.m. dem nachfolgenden Dreschvorgang ein höherer Dreschdurchsatz ermöglicht wird.

Weitere Erntemaschinen sind z.B. aus WO2019015728 A1 und US2006025188 A1 bekannt.

Es ist Aufgabe der vorliegenden Erfindung, den Transportbereich zu optimieren, insbesondere die auftretenden Presskräfte zum Herauslösen von Korn aus den Ähren zu verbessern.

Diese Aufgabe wird durch die Erntemaschine nach Anspruch 1 gelöst. Weiterbildungen der Erfindung sind in den Unteransprüchen beschrieben.

Die Erhebungen besitzen jeweils eine Dachfläche, die sich von einer der vorderen Kante der Platte zugewandten abgerundeten Spitze bis zu einem Maximalmaß verbreitern und anschließend wieder verjüngen, wobei der sich verjüngende Teil der Dachfläche kontinuierlich bis zur Oberfläche der ebenen Platte abgesenkt ist. Durch die reihenweise angeordneten Erhebungen werden beim Herübergleiten des Erntegutes abwechselnd Kompressionen und Dekompressionen ausgelöst, wobei reife Ähren aufgelöst oder reife Wintergerste entgrannt werden. Die Erhebungen besitzen eine Dachfläche, der sich in dem vorderen Bereich, in dem sich die Dachfläche verbreitert, jeweils Seitenflächen, die bis zur Oberfläche der Platte reichen, anschließen. Diese Seitenflächen dienen, zusammen mit der eingangs mittig gesetzten, ansteigenden Rundspitze, als Auflauframpen für das Erntegut. Im hinteren Bereich der Erhebungen verjüngt sich die Dachfläche, die zudem eine abfallende Neigung besitzt, wodurch auch die Höhe der Seitenflächen, die sich an die Dachfläche anschließen, kontinuierlich kleiner wird und bis auf den Abstandswert 0 absinkt. Dieser Bereich, wie auch der zwischen den Erhebungen liegende Bereich der Plattenoberfläche, dient als Dekompressionsbereich. Die Platte besitzt im Anschluss an die vordere Kante mehrere Reihen von beabstandeten Erhebungen, wobei jede Reihe mit mehreren, vorzugsweise gleich beabstandeten Erhebungen ausgestattet ist.

Die beschriebene Platte kann auch in einer Schneidwerksmulde, in einem Vorkorb oder in dem Eingang eines Hauptkorbes angeordnet werden.

Erfindungsgemäß sind die Seitenflächen, welche die Dachfläche mit der Oberfläche der Platte verbinden, im Wesentlichen rechtwinklig zur Dachfläche angeordnet. Es hat sich herausgestellt, dass die bereits geschilderte Geometrie i.V.m. einer vertikalen Ausrichtung der Seitenfläche die Wirkung verbessert. Die zwischen der Dachfläche und den Seitenflächen gebildete Ecke ist vorzugsweise ebenso wie die Spitze der Dachfläche leicht abgerundet.

Zur Verbesserung der Presswirkung sind ferner die seitlichen Begrenzungslinien der Dachfläche von der Spitze bis zu deren maximalen Breite konkav ausgebildet. Vorzugsweise liegt der Radius der Begrenzungslinien zwischen 50 mm und 60 mm, insbesondere zwischen 50 mm und 55 mm.

Die maximale Breite der Dachfläche der Erhebungen liegt zwischen 60 mm und 65 mm. Nach einer weiteren Ausgestaltung der Erfindung setzen sich die seitlichen Begrenzungslinien der Dachfläche im sich verjüngenden Teil in einer konkaven Krümmung fort, vorzugsweise besitzen die Begrenzungslinien Krümmungen mit demselben Radius wie die Begrenzungslinien der Dachfläche im sich verbreiternden Teil.

Des Weiteren beträgt vorzugsweise der maximale Abstand der Dachfläche von der Plattenoberfläche (im vorderen Bereich) 2 mm bis 15 mm, insbesondere 5 mm bis 6 mm. Die Breite der Dachfläche reduziert sich im abgesenkten Bereich nach einer weiteren Ausgestaltung der Erfindung minimal auf 15 mm bis 25 mm, vorzugsweise 20 mm, was dadurch begründet ist, dass die Dachfläche im hinteren Bereich derart abgesenkt wird, dass sich die seitlichen Begrenzungslinien nicht mehr in einer "hinteren Spitze" treffen, sondern auf dem Oberflächenboden der Platte auslaufen.

Die Gesamtlänge der Dachfläche von der vorderen Spitze bis zum Ende der abgesenkten Dachfläche liegt zwischen 50 mm und 60 mm, vorzugsweise bei etwa 55 mm.

Wie bereits erwähnt, liegen in einer Reihe mehrere Erhebungen nebeneinander, wobei deren Abstand zwischen 35 mm und 45 mm liegt. Der Abstand hintereinanderliegender Erhebungen bzw. der jeweiligen Reihen beträgt 5 mm bis 6 mm.

Erfindungsgemäß weisen die Erhebungen Dachflächen auf, die zur Spitze und im gegenüberliegenden Bereich jeweils bis zur Oberfläche der ebenen Platte abgesenkt sind. Dazwischen kann ein mittlerer Bereich liegen, der entweder planparallel zur Plattenoberfläche oder leicht konvex gewölbt ist.

Die vordere und hintere Absenkung der Dachfläche ist vorzugsweise eben ausgebildet, wobei diese Absenkungsebene einen Keilwinkel mit der Oberfläche der Platte bildet, der zwischen 15° und 30° liegt. Das mittlere Plateau liegt in diesem Fall parallel zur Oberfläche.

Es hat sich ferner von Vorteil erwiesen, jede Reihe von Erhebungen gegenüber der nachfolgenden bzw. vorangehenden Reihe versetzt anzuordnen. Insbesondere liegen die Erhebungen der übernächsten Reihe auf derselben längsaxialen Linie des Förderkanals.

Eine weitere Optimierung der Presskräfte wird dadurch erzielt, dass die vordere Kante der Platte wellenförmig ausgebildet ist, vorzugsweise sinusförmig mit einer Wellenlänge von 90 mm bis 110 mm.

Weitere Details der Erfindung werden anhand der Zeichnungen erläutert. Es zeigen:
- Fig. 1: eine Prinzipskizze eines nach dem Stand der Technik bekannten Mähdreschers und
- Fig. 2: eine Draufsicht auf eine Transportbereich-Platte sowie
- Fig. 3: eine Detailansicht dieser Platte.
- Fig. 4a-c: verschiedene Ansichten einer Erhebung

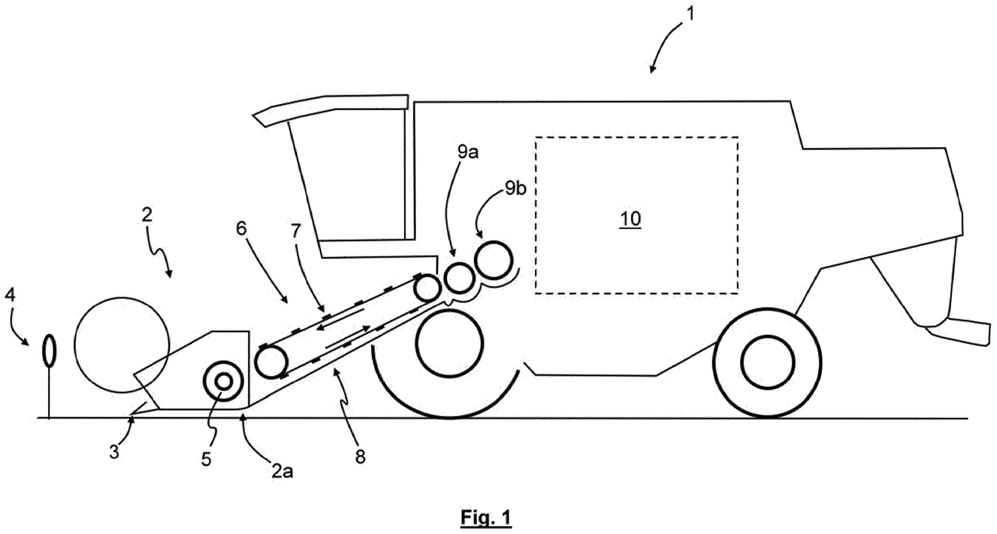

Der in Fig. 1 dargestellte Mähdrescher 1 besitzt ein Schneidwerk 2 mit einem Mähmesser 3, mit dem mittels eines Messerbalkens oder Mähwerkes Getreide 4 geschnitten wird, das eine Körnerfrucht, eine Samenfrucht, eine Ernte von Samenträgern oder dergleichen sein kann und dass mittels seitlicher und zentraler Transportbänder oder Einzugsschnecken 5 quer zur Fahrtrichtung zum Schrägförderer 6 transportiert wird. Der Schrägförderer 6 besitzt umlaufende Förderleisten, nämlich Einzugsleisten 7, die das geschnittene Getreide oder andere Fruchtarten auf einem schräg angeordneten Transportbereich 8 zum Vorkorb 9a zur Dreschtrommel 9b oder einem anderen Dreschwerk transportieren. Die Dreschtrommel rotiert dabei oberhalb eines Dreschkorbes, der Ausnehmungen zwischen Dreschleisten aufweist, durch welche die herausgelösten Körner hindurchfallen. Die Dreschtrommel ist üblicherweise mit massigen Dresch- oder Schlagleisten bestückt, die mit hoher Wahrscheinlichkeit über den Dreschkanten im Dreschkorb rotieren.

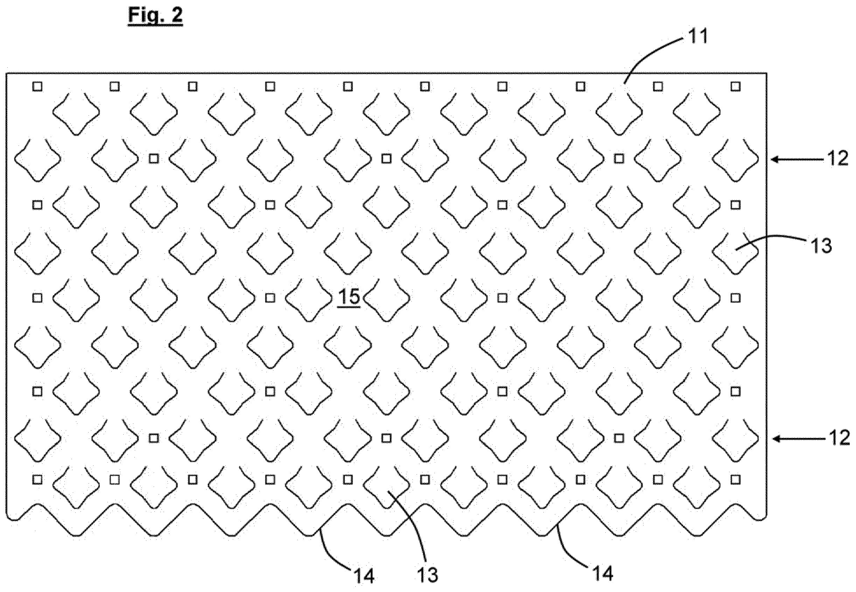

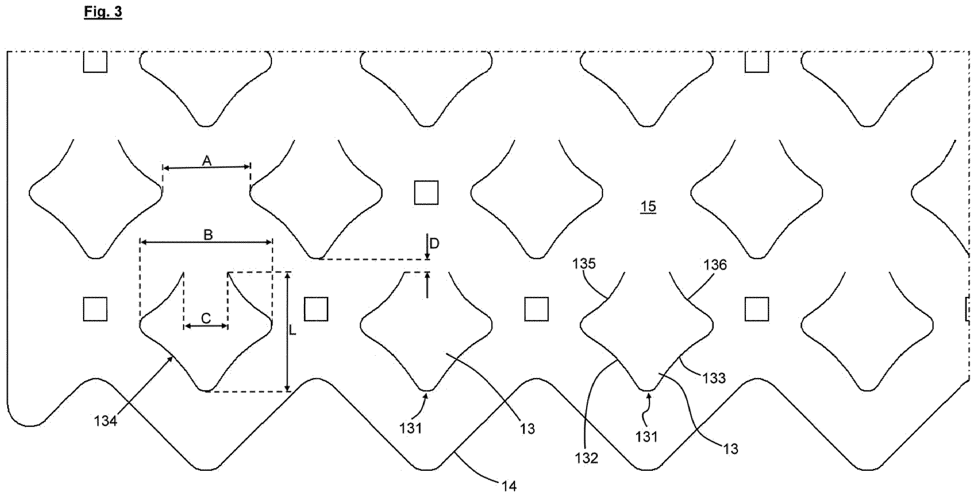

Im Transportbereich 8 ist eine Platte 11 (siehe Fig. 2) angeordnet, in der im vorliegenden Fall neun Reihen 12 von einzelnen Erhebungen 13 angeordnet sind. Diese Erhebungen 13 sind jeweils identisch ausgestaltet und werden anhand der Fig. 3 näher erläutert. Die vordere Kante 14 der Platte 11 ist wellenförmig ausgebildet, wobei die Wellenform eine Wellenlänge von 100 mm besitzt. Die Rundspitzen 131 der ersten Reihe von Erhebungen liegen auf derselben längsaxialen Linie wie entsprechende vorspringende Wellenberge der wellenförmigen Kante 14. Die Rundspitze 131 der Erhebungen 13 ist abgerundet. An die in der Draufsicht sichtbaren Dachfläche schließen sich links- wie rechtsseitig konkav ausgebildete Begrenzungslinien 132, 133 an, deren Krümmungsradius 134 bei 50 mm bis 60 mm liegt. Die Dachfläche der Erhebungen 13 verbreitert sich von der Rundspitze 131 ausgehend auf ein Breitenmaß B von 60 mm, wo dran sich konkave Begrenzungsflächen 135 und 136 anschließen, die in der Oberfläche 15 der Platte 11 auslaufen. Der Abstand dieser auslaufenden Punkte C liegt bei 20 mm.

Durch die gewählten Abmessungen ergibt sich ein gegenseitiger Abstand A der einzelnen Erhebungen 13 von 40 mm. Das Abstandsmaß d zwischen zwei aufeinanderfolgenden Reihen liegt bei etwa 5,7 mm.

Vorzugsweise sind die Dachflächen, die durch die Begrenzungslinien 132, 133, 135 und 136 begrenzt werden, von der Spitze bis zu dem hinteren auf dem Grund auslaufenden Teil leicht konvex gewölbt.

Wie aus Fig. 2 ersichtlich, sind ferner die Erhebungen 13 der nächstliegenden Reihe versetzt zu den Erhebungen 13 der davorliegenden Reihe angeordnet, wobei das Maß der Versetzung etwa mittig zueinander liegt, d.h. dass die Rundspitzen 131 der Erhebungen der ersten Reihe auf derselben Längsachse wie die vorstehenden Spitzen der wellenförmigen Kante 14 liegen und die Spitzen der darauffolgenden Reihe auf derselben Längslinie wie die Minima der wellenförmigen Kante 14.

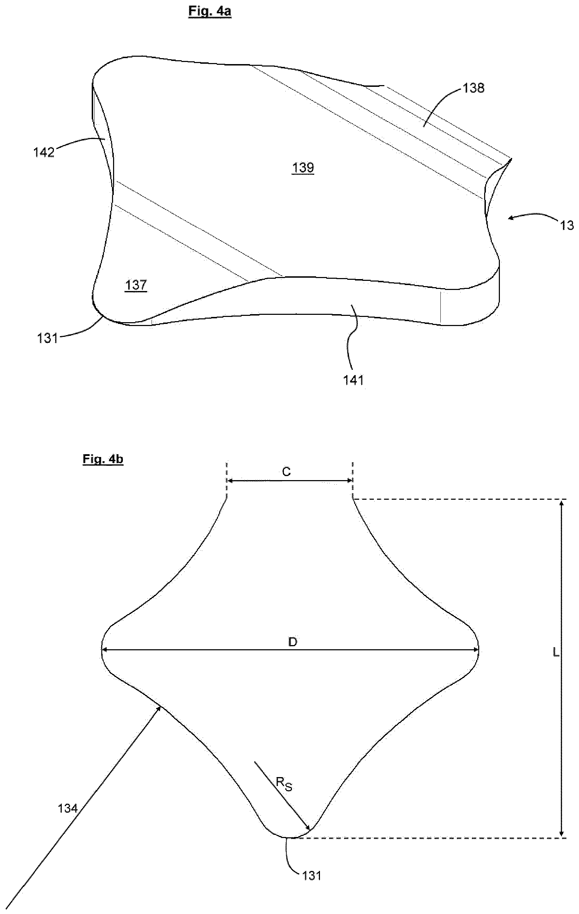

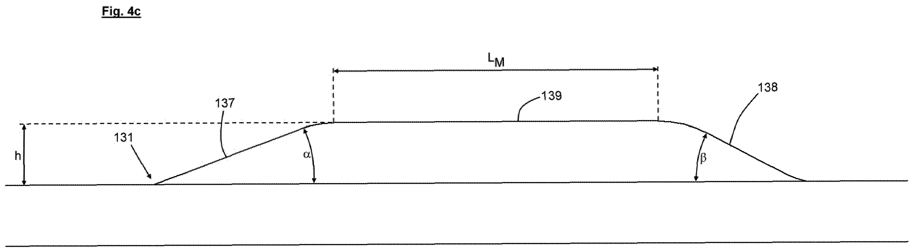

Eine weitere mögliche Ausführungsform der Erhebungen (hier ohne Platte dargestellt), zeigt Fig. 4a bis c. Diese Erhebung 13 besitzt eine vordere Rundspitze 131 sowie einen hinteren abgesenkten Bereich 138 und einen mittleren Bereich 139, der, wie aus Fig. 4c ersichtlich eben ausgebildet ist und sich über eine Länge L_{M} von ca. 27 mm erstrecken kann. Dieser mittlere plane Bereich ist unter Ausbildung eines Keilwinkels α zur Spitze 131 hin von etwa 21° gegenüber der vorderen Anstiegsfläche 137 bzw. unter einem Winkel β von ca. 28° gegenüber der abfallenden Fläche 138, die kürzer ausgebildet ist, geneigt. Die Übergangsbereiche zwischen den Flächen 138 und 139 bzw. 137 und 139 sind leicht abgerundet.

Die Seitenflächen 141 und 142 liegen vertikal zu der jeweiligen Dachfläche 137, 138 und 139 unter Ausbildung einer Kante.

Der Krümmungsradius 134 der Seitenflächen 141, 142 liegt einheitlich bei 60 mm, wohingegen der Krümmungsradius Rs an der Spitze 131 bei 5,2 mm liegt.

Das Maß der größten Breite D beträgt 60 mm, das Maß C der auslaufenden Punkte bei 20 mm. Die Erhebung ist spiegelsymmetrisch entlang einer senkrecht zur Durchmesserachse D liegenden Längsachse ausgebildet.

Die beschriebenen Erhebungen 13 können, wie es in den Fig. 2 und 3 dargestellt ist, so angeordnet sein, dass alle Erhebungen 13 in Flussrichtung des Erntegutes, parallel zur Kante 12 der Transportbereichsplatte 11, gleichgerichtet sind. Das bedeutet, dass die Verbindungslinie zwischen der Rundspitze 131 und der hinteren Absenkung 138 jeder Erhebung 13 in Flussrichtung verläuft, also in den Fig. 2 und 3 von unten nach oben.

Alternativ hierzu können die Erhebungen 13 auch um eine Winkelneigung, insbesondere um eine Winkelneigung von ± 30° gegenüber der Flussrichtung verdreht sein. Vorzugsweise ist vorgesehen, dass nebeneinanderliegende Erhebungen 13 alternierend verdreht auf der Transportbereichsplatte angeordnet sind. Insbesondere ist vorgesehen, dass nebeneinanderliegende Erhebungen 13 in Bezug zur Flussrichtung alternierend um + 30° und - 30° verdreht sind. Die Flussrichtung kann ebenso so gewählt werden, dass sie in den Fig. 2 und 3 von oben nach unten gerichtet ist.

Erfindungswesentlich ist jedenfalls die geometrische Ausgestaltung der Erhebungen, die entsprechend der Darstellungen in den Fig. 2 und 3 reihenweise gleichgerichtet oder, in einer alternativen Ausführungsform, jeweils wechselseitig verschwenkt oder auch ungeordnet, d.h. ohne konkrete Symmetrie angeordnet sein können.

### Bezugszeichenliste

- 1: Mähdrescher
- 2: Schneidwerk
- 2a: Schneidwerksmulde
- 3: Mähmesser
- 4: Getreide
- 5: Einzugsschnecken
- 6: Schrägförderer
- 7: Einzugsleisten
- 8: Transportbereich
- 9a: Vorkorb
- 9b: Dreschtrommel
- 10: Auffangbehälter
- 11: Platte
- 12: Reihen einzelner Erhebungen
- 13: Erhebung
- 131: Rundspitzen
- 132, 133: konkav ausgebildete Begrenzungslinien
- 134: Krümmungsradius
- 135, 136: Begrenzungsflächen
- 137: vordere Absenkung
- 138: hintere Absenkung
- 139: mittleres Plateau
- 14: Vordere Kante der Platte 11
- 141, 142: Seitenflächen
- 15: Oberfläche der Platte 11 (neben den Erhebungen 13)

- A, B, C, D, L_{M}: Abstandsmaße

- α, β': Winkel

## Patentansprüche

1. Erntemaschine, insbesondere Mähdrescher, mit einem Schneidwerk (2) und einer Schneidwerksmulde (2a), mit einem Schrägförderer (6), der Schrägfördermittel aufweist, wobei in einem Transportbereich (8) eine ebene Platte (11) mit einer vorderen Kante (14) und mit mehreren in Reihe angeordneten Erhebungen (13) angeordnet ist,
wobei die Erhebungen (13) jeweils eine Dachfläche besitzen, die sich von einer der vorderen Kante (14) der Platte zugewandten abgerundeten Spitze (131) bis zu einem Maximalmaß (B) verbreitert und hieran anschließend wieder verjüngt, wobei der sich verjüngende Teil der Dachfläche kontinuierlich bis zur Oberfläche (15) der ebenen Platte (11) abgesenkt ist, und wobei die Erhebungen (13) Dachflächen (137, 138, 139) aufweisen, die zur Spitze (131) und im gegenüberliegenden Bereich jeweils bis zur Oberfläche (15) der ebenen Platte (11) abgesenkt sind,
**dadurch gekennzeichnet, dass**
Seitenflächen, welche die Dachflächen mit der Oberfläche (15) der Platte (11) verbinden, im Wesentlichen rechtwinklig zur Dachfläche angeordnet sind.

2. Erntemaschine nach Anspruch 1, **dadurch gekennzeichnet, dass** seitliche Begrenzungslinien (132, 133) der Dachfläche von der Spitze (131) bis zu deren maximalen Breite (B) konkav ausgebildet sind.

3. Erntemaschine nach Anspruch 2, **dadurch gekennzeichnet, dass** die Begrenzungslinien (132, 133) einen Radius (134) zwischen 50 mm und 60 mm, vorzugsweise zwischen 50 mm und 55 mm aufweisen.

4. Erntemaschine nach einem der Ansprüche 1 bis 3, **dadurch gekennzeichnet, dass** die Dachfläche eine maximale Breite (B) zwischen 60 mm und 65 mm besitzt.

5. Erntemaschine nach einem der Ansprüche 1 bis 4, **dadurch gekennzeichnet, dass** einzelne Begrenzungslinien (135, 136) der Dachfläche im sich verjüngenden Teil konkav gekrümmt sind, vorzugsweise unter demselben Radius (134) wie die Begrenzungslinien (132, 133) der Dachfläche im sich verbreiternden Teil.

6. Erntemaschine nach einem der Ansprüche 1 bis 5, **dadurch gekennzeichnet, dass** der maximale Abstand der Dachfläche von der Plattenoberfläche (15) 2 mm bis 15 mm, vorzugsweise 5 mm bis 6 mm beträgt.

7. Erntemaschine nach einem der Ansprüche 1 bis 6, **dadurch gekennzeichnet, dass** sich die Breite (C) der Dachfläche im abgesenkten Bereich minimal auf 15 mm bis 25 mm, vorzugsweise 20 mm reduziert.

8. Erntemaschine nach einem der Ansprüche 1 bis 7, **dadurch gekennzeichnet, dass** die Gesamtlänge (L) der Dachfläche von der vorderen Spitze bis zum Ende der abgesenkten Dachfläche 50 mm bis 60 mm, vorzugsweise 55 mm ist.

9. Erntemaschine nach einem der Ansprüche 1 bis 8, **dadurch gekennzeichnet, dass** der Abstand (A) nebeneinanderliegender Erhebungen (13) zwischen 35 mm und 45 mm liegt und/oder der Abstand (D) hintereinanderliegender Erhebungen (13) zwischen 5 mm und 6 mm liegen.

10. Erntemaschine nach einem der Ansprüche 1 bis 9, **dadurch gekennzeichnet, dass** die vordere und hintere Absenkung (137, 138) der Dachfläche jeweils unter einem Keilwinkel (α, β) zwischen 15° und 30° ausläuft und das mittlere Plateau (139) parallel zur Oberfläche (15) der Platte (11) liegt.

11. Erntemaschine nach einem der Ansprüche 1 bis 10, **dadurch gekennzeichnet, dass** jede Reihe von Erhebungen gegenüber der nachfolgenden Reihe versetzt angeordnet ist.

12. Erntemaschine nach einem der Ansprüche 1 bis 11, **dadurch gekennzeichnet, dass** die vordere Kante (14) der Platte (11) wellenförmig ausgebildet ist, vorzugsweise sinusförmig mit einer Wellenlänge zwischen 90 mm und 110 mm.

13. Erntemaschine nach einem der Ansprüche 1 bis 12, **dadurch gekennzeichnet, dass** die Platte (11) in einer Schneidwerksmulde (2a), in einem Vorkorb (9a) oder im Eingang eines Hauptkorbes angeordnet ist.

## Claims

1. Harvester, in particular combine harvester, with a cutting unit (2) and a cutting unit trough (2a), with an inclined conveyor (6) which has inclined conveyor means, wherein a flat plate (11) with a front edge (14) and with several elevations (13) arranged in series is arranged in a transport region (8),
wherein
the elevations (13) each possess a roof surface which widens from a rounded tip (131) facing the front edge (14) of the plate to a maximum dimension (B) and then tapers again,
wherein the tapering part of the roof surface is continuously lowered to the surface (15) of the flat plate (11), and wherein the elevations (13) have roof surfaces (137, 138, 139) which are lowered towards the tip (131) and in the opposite region in each case to the surface (15) of the flat plate (11),
**characterized in that**
side surfaces, which connect the roof surfaces with the surface (15) of the plate (11), are arranged essentially at right angles to the roof surface.

2. Harvester according to claim 1, **characterized in that** lateral boundary lines (132, 133) of the roof surface are formed concave from the tip (131) up to its maximum width (B).

3. Harvester according to claim 2, **characterized in that** the boundary lines (132, 133) have a radius (134) between 50 mm and 60 mm, preferably between 50 mm and 55 mm.

4. Harvester according to one of claims 1 to 3, **characterized in that** the roof surface has a maximum width (B) of between 60 mm and 65 mm.

5. Harvester according to one of claims 1 to 4, **characterized in that** individual boundary lines (135, 136) of the roof surface in the tapering part are concavely curved, preferably under the same radius (134) as the boundary lines (132, 133) of the roof surface in the widening part.

6. Harvester according to one of claims 1 to 5, **characterized in that** the maximum distance of the roof surface from the plate surface (15) is 2 mm to 15 mm, preferably 5 mm to 6 mm.

7. Harvester according to one of claims 1 to 6, **characterized in that** the width (C) of the roof surface in the lowered area is minimally reduced to 15 mm to 25 mm, preferably 20 mm.

8. Harvester according to one of claims 1 to 7, **characterized in that** the total length (L) of the roof surface from the front tip to the end of the lowered roof surface is 50 mm to 60 mm, preferably 55 mm.

9. Harvester according to one of claims 1 to 8, **characterized in that** the distance (A) of adjacent elevations (13) is between 35 mm and 45 mm and/or the distance (D) of elevations (13) located one behind the other is between 5 mm and 6 mm.

10. Harvester according to one of claims 1 to 9, **characterized in that** the front and rear lowering (137, 138) of the roof surface each run out at a wedge angle (a, ß) between 15° and 30° and the central plateau (139) lies parallel to the surface (15) of the plate (11).

11. Harvester according to one of claims 1 to 10, **characterized in that** each row of elevations is offset with respect to the following row.

12. Harvester according to one of claims 1 to 11, **characterized in that** the front edge (14) of the plate (11) is formed wave-shaped, preferably sinusoidal with a wave length between 90 mm and 110 mm.

13. Harvester according to one of claims 1 to 12, **characterized in that** the plate (11) is arranged in a cutting unit trough (2a), in a pre-basket (9a) or in the entrance of a main basket.

## Revendications

1. Moissonneuse, en particulier moissonneuse-batteuse, avec un mécanisme de coupe (2) et une auge de mécanisme de coupe (2a), avec un convoyeur incliné (6), qui présente des moyens de transport inclinés, une plaque plane (11) avec un bord avant (14) et avec plusieurs élévations (13) disposées en série étant disposée dans une zone de transport (8),
où
les élévations (13) possèdent chacune une surface de toit qui s'élargit depuis une pointe arrondie (131) tournée vers le bord avant (14) de la plaque jusqu'à une dimension maximale (B) et qui se rétrécit ensuite à nouveau,
la partie effilée de la surface de toit étant abaissée en continu jusqu'à la surface (15) de la plaque plane (11), et les élévations (13) présentant des surfaces de toit (137, 138, 139) qui sont abaissées vers la pointe (131) et dans la zone opposée respectivement jusqu'à la surface (15) de la plaque plane (11),
**caractérisé en ce que**
des surfaces latérales reliant les surfaces de toit à la surface (15) de la plaque plane (11) sont disposées sensiblement perpendiculairement à la surface de toit.

2. Moissonneuse selon la revendication 1, **caractérisée en ce que** des lignes de délimitation latérales (132, 133) de la surface du toit sont concaves depuis la pointe (131) jusqu'à sa largeur maximale (B).

3. Moissonneuse selon la revendication 2, **caractérisée en ce que** les lignes de délimitation (132, 133) ont un rayon (134) compris entre 50 mm et 60 mm, de préférence entre 50 mm et 55 mm.

4. Moissonneuse selon l'une des revendications 1 à 3, **caractérisée en ce que** la surface du toit a une largeur maximale (B) comprise entre 60 mm et 65 mm.

5. Moissonneuse selon l'une quelconque des revendications 1 à 4, **caractérisée en ce que** certaines lignes de délimitation (135, 136) de la surface du toit dans la partie qui se rétrécit sont incurvées de manière concave, de préférence selon le même rayon (134) que les lignes de délimitation (132, 133) de la surface du toit dans la partie qui s'élargit.

6. Moissonneuse selon l'une des revendications 1 à 5, **caractérisée en ce que** la distance maximale entre la surface du toit et la surface (15) de la plaque plane est de 2 mm à 15 mm, de préférence de 5 mm à 6 mm.

7. Moissonneuse selon l'une des revendications 1 à 6, **caractérisée en ce que** la largeur (C) de la surface du toit dans la zone abaissée se réduit au minimum à 15 mm à 25 mm, de préférence à 20 mm.

8. Moissonneuse selon l'une quelconque des revendications 1 à 7, **caractérisée en ce que** la longueur totale (L) de la surface de toit, de la pointe avant à l'extrémité de la surface de toit abaissée, est de 50 mm à 60 mm, de préférence de 55 mm.

9. Moissonneuse selon l'une des revendications 1 à 8, **caractérisée en ce que** la distance (A) entre des élévations (13) situées les unes à côté des autres est comprise entre 35 mm et 45 mm et/ou la distance (D) entre des élévations (13) situées les unes derrière les autres est comprise entre 5 mm et 6 mm.

10. Moissonneuse selon l'une quelconque des revendications 1 à 9, **caractérisée en ce que** les abaissements avant et arrière (137, 138) de la surface du toit se terminent chacun par un angle de calage (a, ß) compris entre 15° et 30° et **en ce que** le plateau central (139) est parallèle à la surface (15) de la plaque plane (11).

11. Moissonneuse selon l'une des revendications 1 à 10, **caractérisée en ce que** chaque rangée d'élévations est décalée par rapport à la rangée suivante.

12. Moissonneuse selon l'une des revendications 1 à 11, **caractérisée en ce que** le bord avant (14) de la plaque (11) est ondulé, de préférence sinusoïdal, avec une longueur d'onde comprise entre 90 mm et 110 mm.

13. Moissonneuse selon l'une des revendications 1 à 12, **caractérisée en ce que** la plaque (11) est disposée dans une auge (2a) de la barre de coupe, dans un pré-corbeille (9a) ou à l'entrée d'une corbeille principale.
